# EUROPÄISCHE PATENTSCHRIFT

(11) **EP 0 776 753 B1**
(45) Veröffentlichungstag und Bekanntmachung des Hinweises auf die Patenterteilung: **06.02.2002**
(21) Anmeldenummer: 96117690.6
(22) Anmeldetag: 05.11.1996
(51) Int. Cl.: B29C 61/06

(54) **Wärmeschrumpfbare Umhüllung**
Heat-shrinkable covering
Enveloppe thermorétractable

(30) Priorität: 29.11.1995 DE 19544539
(43) Veröffentlichungstag der Anmeldung: 04.06.1997
(73) Patentinhaber: RXS Gesellschaft für Vermögensverwaltung mbH, 80333 München (DE)
(72) Erfinder: Affolderbach, Ulrich, Dipl.-Ing., 42279 Wuppertal (DE); Rose, Sigrid, Dr.rer. nat., 58300 Wetter (DE); Kupczyk, Andreas, Mgr. der Physik, 58099 Hagen (DE); Meltsch, Hans-Jürgen, Dipl.-Ing., 58239 Schwerte (DE); Schulte, Wolfgang, Dipl.-Ing., 58009 Hagen (DE)
(74) Vertreter: Viering, Jentschura & Partner

(56) Entgegenhaltungen:
- EP-A- 0 121 733
- EP-A- 0 299 438
- EP-A- 0 414 414
- EP-A- 0 626 742
- CH-A- 490 180
- DE-A- 3 150 544
- DE-A- 4 200 251
- DE-U- 9 208 661
- FR-A- 2 094 130
- US-A- 4 554 202
- US-A- 5 413 790
- US-A- 5 449 537

## Beschreibung

Die Erfindung betrifft eine wärmeschrumpfbare Umhüllung (UH) mit einer Flächenschicht (FS) und einer Verstärkungseinlage (VE), welche aus einem Gitter aus langgestreckten, parallelen ersten und langgestreckten, parallelen zweiten Gitterelementen (GE) gebildet ist, wobei die ersten und die zweiten Gitterelemente (GE) überkreuz zueinander angeordnet sind, und wobei die ersten und die zweiten Gitterelemente (GE) aus Kunststoff sind und an ihren Kreuzstellen fest haftend miteinander verbunden sind.

Eine ähnliche wärmeschrumpfbare Umhüllung ist aus der CH 490 180 bekannt.

Es sind wärmeschrumpfbare Umhüllungen bekannt, die zur Verstärkung der mechanischen Eigenschaften verstärkende Einlagen enthalten, wie sie zum Beispiel in der Schrift des deutschen Gebrauchsmusters GM 75 01 913 beschrieben sind. Hier werden jedoch nur längsgerichtete Verstärkungselemente verwendet, damit die Schrumpfrichtung der Umhüllung nicht beeinflußt wird. Dies hat jedoch zur Folge, daß sich Verletzungen an der Umhüllung, wie zum Beispiel Einrisse in Längsrichtung, ungehindert fortsetzen können. Dies ist besonders dann gefährlich, wenn diese Verletzungen an einem stirnseitigen Rand erfolgen, da dann beim Schrumpfen infolge der Schrumpfkräfte ein weiteres Einreißen in Längsrichtung der Umhüllung nicht aufzuhalten ist. Um dieses Problem zu lösen, werden zum Beispiel auch Gewebe oder Gewirke eingesetzt, die in der europäischen Patentschrift 0 117 026 beschrieben werden. Dort werden jedoch schrumpfbare Gewebe verwendet, die in einem nicht schrumpfbaren Material eingebettet sind. Um eine entsprechend höhere mechanische Festigkeit zu erreichen, sind in diesen Geweben neben den in einer Schrumpfrichtung verlaufenden schrumpfbaren Fäden auch nicht schrumpfbare wärmebeständige Fäden eingelegt, die in der zweiten Geweberichtung verlaufen. Es besteht die Gefahr von Hohlräumen entlang der wärmebeständigen Fäden und der längsgerichteten Verstärkungselemente.

Aus der EP 0 299 438 B1 ist eine wärmeschrumpfbare Umhüllung mit einer schrumpffähigen Komponente, die in einer nicht schrumpffähigen Komponente angeordnet ist, bekannt. Diese schrumpffähige Komponente besteht aus einem vernetzten Polymer und ist in Netzform ausgebildet und geweitet. Diese schrumpffähige Komponente wird mit der nicht schrumpfbaren Flächenkomponente fest haftend zusammengebracht bzw. darin eingelagert. Bei einer derartigen Ausführung werden die Schrumpfkräfte ausschließlich von der in Netzform ausgebildeten schrumpffähigen Netzeinlage aufgebracht.

Weiter ist aus der europäischen Patentschrift 0 299 439 B1 eine schrumpfbare Umhüllung aus mindestens einer wärmeschrumpfbaren Komponente und aus einer mechanischen verstärkenden Komponente bekannt. Hier wird die schrumpfbare Komponente aus einer die ganze Umhüllung überstreckenden Flächenfolie gebildet, wobei diese schrumpfbare Komponente bereits geweitet ist. Die mechanischen Verstärkungskomponenten werden in festen Verbund zur schrumpfbaren Komponente gebracht, wobei diese mechanische Verstärkungskomponente zumindest in Schrumpfrichtung verlaufende Verstärkungselemente aufweist. Diese Verstärkungselemente sind so gestaltet, daß eine der Schrumpfung der schrumpfbaren Komponente entsprechende Formänderung möglich ist.

Aus DE 31 50 544-A1 ist eine isolierende, wasserdichte Kabelendisolierung bekannt, die aus einer wärmeschrumpfenden Polyethylenfolie mit einem lose oder direkt verbundenen eindimensional schrumpfenden Gewirke besteht.

In DE 42 00 251-A1 wird ein wärmerückstellbarer Gegenstand beschrieben, bei dem innerhalb der Wandung aus vernetztem Polymermaterial in Schrumpfrichtung verlaufende Verstärkungsfolien angeordnet sind. Die Verstärkungsfolien sind aus gummi- elastischem Werkstoff und in gerecktem Zustand eingelagert.

In CH 490 180-A wird eine Bandfolie vorgestellt, die aus zwei miteinander verbundenen Deckfolienbahnen besteht, zwischen denen als Verstärkung ein gitterförmiges Flächengebilde eingelagert ist. Die Verstärkungseinlage besteht aus gereckten, parallel zu den Deckfolienbahnen flach liegenden Folienbändchen und kann ggf. schrumpffähig sein.

Aus FR 2.094.130 ist ein wärmerückstellbares Flächencebilde bekannt, bei dem zwischen zwei Folien Bändchen eingelegt sind, die diagonal gitterförmig verlaufen.

In dem US Patent 4,554,202 wird eine Verpackungseinheit aus einem gewobenen oder gestrickten Netz beschrieben, dessen Fasern aus Low-Density-Ethylene-Polymer bestehen und die gereckt sind. Dieses Netz ist allseitig schrumpffähig.

Aus dem US Patent 5,449,537 ist eine wärmeschrumpfbare Kombinationsfolie bekannt, die aus zwei übereinanderliegenden schrumpfbaren Folien gebildet wird. Diese Folien sind mit ihren Schrumpfrichtungen unter einem Winkel so aufeinander gebracht, daß sich eine resultierende neue Schrumpfrichtung für das Gesamtgebilde ergibt.

Eine wärmeschrumpfbare, flächenhaft ausgebildete Umhüllung für Kabelspleiße ist aus US 5,413,790 bekannt. Sie ist mit einer Schicht versehen, die bei Wärmezufuhr schmilzt und eine Schutzschicht ergibt. Diese Schicht enthält Glasfasern oder Insektizide zum Schutz gegen Schädlinge.

Aus EP 0 414 414-A2 ist eine weitere wärmeschrumpfbare Schutzumhüllung bekannt.

Das deutsche Gebrauchsmuster DE 92 08 661-U umfaßt einen wärmerückstellbaren bandförmigen Gegenstand zum Umhüllen von Substraten. Dieser Gegenstand besteht aus einer Wärmerückstellbaren Lage und einer Schicht aus Heißschmelzkleber, sowie einer Schicht aus wasserdampfundurchlässigem Material.

In EP 0 121 733-A2 ist ein wärmeerholbarer Gegenstand aus einer äußeren Schicht, welche formstabil, jedoch thermoplastisch verformbar ist, und einer inneren vernetzten und deshalb wärmeerholbaren Schicht. Die äußere Schicht ist aus farblosem Material hergestellt, so daß die innere Schicht sichtbar und damit deren Zustand erkennbar ist.

Aus EP 0 626 742-A2 ist eine wärmeschrumpfbare Kabelmuffe bekannt, die mit einem Füllmittel zur Vermeidung des Eindringens von Feuchtigkeit aufgefüllt ist.

Aufgabe der Erfindung ist, eine wärmeschrumpfbare Umhüllung zu finden, die für den Einsatz bei starken mechanischen Beanspruchungen gegen lokale Verletzungen oder Einrisse gesichert ist, die in einfacher Weise herstellbar ist und mit der hohe Schrumpfkräfte erreichbar sind.

Die gestellte Aufgabe wird mit einer wärmeschrumpfbaren Umhüllung der eingangs erläuterten Art erfindungsgemäß dadurch gelöst, daß die Umhüllung (UH) einen Längsschlitz aufweist, dessen Schlitzränder mit an den Langskanten verlaufenden Verschlußelementen (VP) versehen sind, daß sowohl die Flächenschicht (FS) als auch das Gitter in Richtung senkrecht zu den Verschlußelementen (VP) schrumpfbar sind, indem sowohl die Flächenschicht (FS) als auch das Gitter in Richtung senkrecht zu den Verschlußelementen (VP) gereckt sind, und daß die Reck- bzw. die Schrumpfrichtung (SR) in einem Winkel zur Längsrichtung der ersten und der zweiten Gitterelemente (GE) verläuft.

Zweckmäßige Weiterbildungen der Erfindung sind Gegenstand der abhängigen Ansprüche.

Vorteile an der Umhüllung gemäß der Erfindung gegenüber dem Stand der Technik sind vor allem darin zu sehen, daß durch Verwendung annähernd gleicher, jedoch jeweils entsprechend modifizierter Materialien für Deckschichten und Verstärkungseinlagen bei allen anstehenden Problemen positive Ergebnisse erreichbar sind.

So kann durch Verwendung von schrumpfbarem Material für die als Deckschicht anzusehenden Flächenschichten wie für die Verstärkungseinlage die gegenseitige Haftfähigkeit verbessert werden. So findet bei einem derartigen Verbund keine Ablösung in den Berührungsbereichen statt. Aufgrund der guten Haftung ist auch gewährleistet, daß sich entlang der Trennflächen zwischen Flächenschicht und Verstärkungseinlage sich keine schädigenden Hohlräume mehr ausbilden können, wie es beispielsweise bei Einlagen aus Glas- oder Kevlarfäden der Fall sein kann.

Weiterhin ist gewährleistet, daß mechanische Belastungen, die zu Einrissen oder sonstigen mechanischen Beschädigungen führen, weitgehend durch die Struktur der Verstärkungseinlage abgefangen werden. Bei der Ausführung der Verstärkungseinlage aus sich kreuzenden Gitterelementen wird eine Beschädigung sich jeweils nur innerhalb einer Gittermasche bis zum nächstfolgenden Gitterelement ausbreiten. Diese hemmende Wirkung kommt durch den Übergang an Materialgrenzflächen zustande, wobei diese Wirkung durch entsprechende Wahl der Kunststoffmaterialien bzw. deren Behandlung je nach Bedarf verstärkt oder gemindert werden kann. So ergeben sich gute Ergebnisse, wenn die Materialien verschieden stark vernetzt sind, wobei die Verstärkungseinlage in diesem Fall den Ausschlag geben sollte. Sie ist deshalb je nach Bedürfnis höher, niedriger oder gleich stark vernetzt wie die Flächenschicht, auf der
sie außen oder innen aufgesetzt oder in der sie eingelagert ist. Die Einlagerung kann auch derart erfolgen, daß die Verstärkungseinlage zwischen zwei Flächenschichten eingebettet ist. Nach der Vernetzung erfolgt dann der für den Schrumpfvorgang bestimmende Reckvorgang, wobei die Reckung in der Richtung erfolgt, in der dann später die Schrumpfung erfolgen soll. Bei der Herstellung einer solchen wärmeschrumpfbaren Umhüllung können die Verstärkungseinlage und die Flächenschicht zunächst für sich behandelt werden. Anschließend erfolgt dann die Laminierung zu einem Verbund. Bei einer anderen Herstellungsweise werden die einzelnen Schichten aufeinander gebracht und dann werden sie im Verbund dem Vernetzungs- und Reckprozeß gleichzeitig unterzogen. Es können jedoch auch bereits Vernetzungen einzelner Schichten, wie der Flächenschicht oder der Verstärkungseinlage vorgenommen werden, so daß sich jeweils optimale Verhältnisse für den jeweiligen Anwendungsfall herstellen lassen. Für schrumpfbare Umhüllungen werden entlang zwei gegenüberliegenden Längskanten Verschlußelemente, zum Beispiel Verschlußwülste, angesetzt oder anextrudiert. Die Reckrichtung und auch die Schrumpfrichtung verlaufen senkrecht zu den Verschlußelementen. Die Oberfläche der außen liegenden Flächenschicht wird vorzugsweise vernetzt, um sie thermisch stabil bzw. flammwidrig zu gestalten.

Bei solchen Ausgestaltungen können auch die Schrumpfeigenschaften optimal eingestellt werden, da jede der Schichten, die Flächenschicht wie auch die Verstärkungseinlage, zur Schrumpfung beitragen. Wenn für die Verstärkungseinlage bezüglich des Materials und dessen Behandlung durch Vernetzung und Reckung, gegebenenfalls auch bereits vor dem Laminieren, die Hauptschrumpfeigenschaft eingeprägt werden, entfallen auch die bisher üblichen Schwierigkeiten, die sich daraus ergeben, daß die passive Verstärkungseinlage so ausgestaltet sein mußte, daß sie die Schrumpfung der Schrumpfschicht nicht behinderte. Für die Steuerung der zusätzlichen Vernetzung können im sogenannten Schrumpfcompound auch Vernetzungsbeschleuniger eingebracht werden, wie zum Beispiel Triallylcyanurat (TAC).

Die genannten Vorteile ergeben sich bei der Verwendung einer Verstärkungseinlage in Form eines Gitters aus Kunststoff mit den oben bereits erläuterten Eigenschaften. Dieses Gitter kann durch sich kreuzende Gitterelemente hergestellt werden, wobei die langgestreckten Gitterelemente verschiedenste Querschnitte sowie verschiedene Stärken bzw. Durchmesser aufweisen können. Es können Gitterelemente mit kreisförmigen, ovalen, rechteckigen, quadratischen, rautenförmigen oder polygonen (z.B. Waben) Querschnitten verwendet werden. Die Gitterelemente sind an den Kreuzungspunkten fest haftend (kraftschlüssig) miteinander verbunden. Die Verbindungen in den Kreuzungspunkten können z.B. durch Kleben, Schweißen oder Quetschen hergestellt werden. Weiterhin ist eine Gitterstruktur im Sinne der Erfindung zu erreichen, wenn in eine Flächenschicht aus schrumpfbarem Material eine Vielzahl von Löchern in regelmäßiger oder unregelmäßiger Verteilung eingebracht sind; denn auch hier bilden sich einzelne Gitterelemente heraus, die den langgestreckten Gitterelementen eines aus einzelnen Gitterelementen erstellten Gitters entsprechen.

Das schrumpfbare Gitter als Verstärkungseinlage wird mit der oder den schrumpfbaren Flächenschichten fest haftend so zusammengebracht, daß ihre Schrumpfrichtungen gleich wirkend sind. Doch können auch mehrere Verstärkungseinlagen aufeinander in den Verbund eingebunden werden, wobei diese dann gleichlaufend oder unter einem Winkel versetzt angeordnet werden. Bei der letztgenannten Ausführung werden die beiden Verstärkungseinlagen dann so eingebracht, daß die resultierende Schrumpfrichtung der einzelnen Verstärkungseinlagen gleichlaufend ist mit der Schrumpfrichtung der Flächenschicht.

Die Schrumpfwerte wie auch die mechanischen Werte können bei einem Verbund gemäß der Erfindung auch dadurch festgelegt werden, daß die Materialstärken der einzelnen Schichten bzw. Verstärkungseinlagen aufeinander abgestimmt werden. So können die einzelnen Schichten gleich stark oder verschieden stark ausgebildet sein. Bei der reinen Gitterform der Verstärkungseinlage können die in der Schrumpfrichtung verlaufenden Gitterelemente beispielsweise stärker ausgebildet sein als die quer dazu verlaufenden Gitterelemente, da letztere keinen Beitrag zur Schrumpfung leisten, jedoch mechanisch wichtig sind für die Verhütung bzw. Begrenzung von Schäden durch mechanische Belastung.

Bei Bedarf können in der Flächenschicht in Querrichtung und/oder Längsrichtung noch zusätzliche Verstärkungselemente wie Glasfasern, Kevlarfäden, Baumwollfäden oder andere nicht oder schwer vernetzbare Materialien, wie zum Beispiel Polypropylen, eingelagert werden; wobei diese dann mit den vorgenannten Problemen behaftet sind.

In mindestens einer Flächenschicht können auch termitenresistente Zusätze eingemischt werden.

Für die Zusammenstellung des Verbundes für eine schrumpfbare Umhüllung gemäß der Erfindung werden folgende Konfigurationen bevorzugt:
- Starke äußere schrumpfbare Flächenschicht mit innen aufgesetzter schrumpfbarer Verstärkungseinlage, wobei die Gittermaschen bzw. Löcher der Verstärkungseinlage mit Füllmaterial ausgefüllt sind, z.B. Thermoplaste, thermoplastische Elastomere, gummielastische Materialien oder Abmischungen daraus.
- Zwei schrumpfbare Flächenschichten, zwischen denen die Verstärkungseinlage eingebettet ist, wobei die Gittermaschen bzw. Löcher der Verstärkungseinlage mit Füllmaterial ausgefüllt sind.
- Äußere schrumpfbare Flächenschicht mit innerer Flächenschicht, die sich in die Gittermaschen bzw. Löcher der dazwischenliegenden Verstärkungseinlage erstreckt.
- Äußere schrumpfbare Flächenschicht, die sich in die Gittermaschen bzw. Löcher der Verstärkungseinlage erstreckt und eine innere schrumpfbare Flächenschicht.

Bei diesen Ausführungsbeispielen können zusätzlich Schichten aufgebracht werden, wie zum Beispiel für die Stabilisierung der äußeren Oberfläche gegen Abfließen bzw. Abtropfen bei Wärmeeinwirkung, für eine Thermoindikation und andere.

Das Füllmaterial für die Maschen- bzw. Löcherbereiche der gitterförmigen Verstärkungseinlagen kann reckbares, vernetzbares oder gummielastisches Material sein. Auch eignen sich hierfür aufblähbare Kunststoffmaterialien, wie sie allgemein in der Kunststoffverarbeitung bekannt sind. Das Füllmittel kann zweckmäßigerweise auch zusätzliche Eigenschaften aufweisen und dient zum Beispiel als Temperaturfilter bzw. Temperaturbegrenzer mit entsprechender Temperatursperrwirkung. Auch gelartiges Material, z.B. Silikon oder Polyurethan, kann hierfür verwendet werden, da es bei geringer Dicke schnell durchwärmbar und flexibel ist und dabei trotzdem ausreichende mechanische Festigkeit aufweist. Es kann ebenfalls als Temperaturfilter bzw. Temperaturbegrenzer mit Temperatursperrwirkung eingesetzt werden. Weiterhin kann als Füllmaterial auch gummielastisches Material verwendet werden, da es beim Schrumpfvorgang leicht verformbar ist.

Außerdem ist Bestandteil der Erfindung, daß der erfindungsgemäße Grundverbund für eine wärmeschrumpfbare Umhüllung mit entsprechenden optischen Anzeigen für ausreichende Temperierung während des Schrumpfvorganges ausgerüstet wird.

So kann die äußere Oberfläche des Verbundes beispielsweise mit einer an sich bekannten Thermochromumschlagfarbe versehen werden, deren Erscheinungsbild sich bei ausreichender Wärmeeinwirkung ändert.

Die äußere Schicht oder auch eine separate Schicht kann aus transparentem Kunststoffmaterial bestehen, durch das die gitterförmigen Verstärkungselemente zu erkennen sind. Wenn nun die Verstärkungseinlage aus einem Material besteht, das bei ausreichender Wärmeeinwirkung beispielsweise seine Farbe ändert, so kann direkt an der entsprechenden Stelle erkannt werden, wann der Schrumpfvorgang beendet werden kann.

Bei der gitterförmigen Ausführung aus einzelnen, sich kreuzenden Gitterelementen können die Kreuzungspunkte des Gitters so ausgebildet sein, daß beim Schrumpfvorgang eine Ausdehnung erfolgt und dadurch eine noppenförmige Außenstruktur entsteht. Diese Struktur zeigt dann an, daß ausreichende Durchwärmung bei Solltemperatur stattgefunden hat.

Ähnliche Auswirkungen können erzeugt werden, wenn das materialkompabible Füllmittel zwischen den Gittermaschen bzw. Löchern der gitterförmigen Verstärkungseinlage aus einem bei Wärme auftreibenden Material besteht. Die Auswirkungen führen dann ebenfalls zu einer strukturierten Oberfläche.

Weiterhin kann eine äußere Deckschicht verwendet werden, die zunächst nicht transparent ist und erst bei entsprechender Wärmezufuhr transparent wird, so daß dann die darunter liegende Indikatorschicht oder Flächenschicht erkennbar wird.

Bei Umhüllungen mit einem längsseitig verlaufenden Schlitz und längs verlaufenden Verschlußelementen muß der Schlitzbereich durch einen sogenannten Untertritt für die Abdichtung überdeckt werden, der vorteilhafterweise als Fortsatz an der Umhüllung ausgebildet ist. Hier bietet sich nun an, daß die Verstärkungseinlage entlang einer Längskante der Umhüllung als Fortsatz weitergeführt wird, so daß dieser den Schlitz von innen her längs überdeckt. Hierfür ist dann zweckmäßigerweise ein Trägerverbund aus dem Gitter und einer Füll- bzw. Flächenschicht herzustellen, um die Gittermaschen bzw. Löcher der Verstärkungseinlage zu verschließen.

Im übrigen bilden die Gittermaschen bzw. Löcher in der Verstärkungseinlage Platz für Kleberreserven, insbesondere im Untertrittbereich, so daß eine sichere Verklebung und Abdichtung im Schlitzbereich wie auch bei der Innenbeschichtung gewährleistet werden kann. Vorteil ist dabei, daß weniger Kleber beim Schrumpfen weggedrückt wird, da Kleberreserven bestehen bleiben und daß eine Schrumpfkraftverringerung und eine Schrumpfkraftvergleichmäßigung auf dem umhüllten Gegenstand, zum Beispiel einem Kabel, gegeben ist.

Die Erfindung wird nun anhand von sechzehn Figuren näher erläutert.
- Figur 1: zeigt die Grundstruktur einer gitterförmigen Verstärkungseinlage mit rautenförmigen Gittermaschen.
- Figur 2: zeigt eine Verstärkungseinlage aus einer Flächenschicht mit eingebrachten Löchern.
- Figur 3: zeigt die Anordnung von zwei im Winkel zueinander versetzten gitterförmigen Verstärkungseinlagen.
- Figur 4: zeigt verschiedene Querschnitte für die einzelnen Gitterelemente.
- Die Figuren 5 bis 9: zeigen verschiedene Verbundmöglichkeiten.
- Figur 10: zeigt eine Umhüllung mit einer Zusatzschicht.
- Figur 11: zeigt eine Umhüllung mit einer optisch sichtbar werdenden Indikatoranzeige.
- Figur 12: zeigt eine Umhüllung mit Verschlußprofilen.
- Figur 13: zeigt eine Umhüllung mit Verschlußprofilen und einer als Verbund ausgebildeten Verstärkungseinlage.
- Figur 14: zeigt eine geschlossene Umhüllung gemäß der Erfindung.

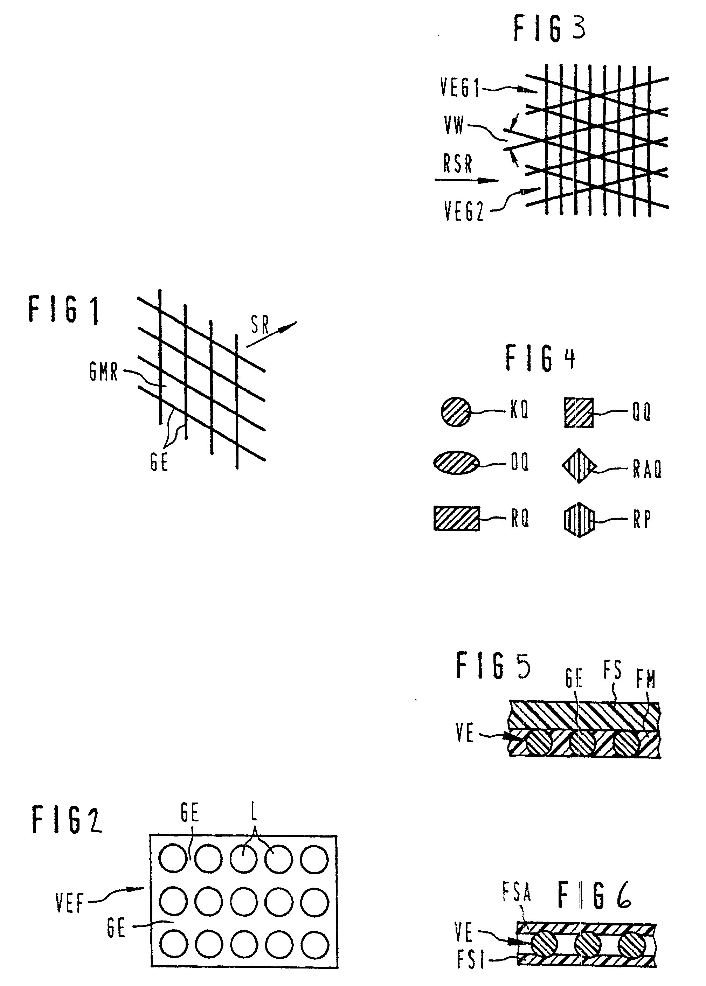

Figur 1 zeigt eine gitterförmige Verstärkungseinlage VEG mit rautenförmiger Gittermaschenbildung GMR. Es können auch gitterförmige Verstärkungseinlagen gleicher oder ungleicher Gittermaschen gegeneinander versetzt eingesetzt werden.

In Figur 2 wird eine in einer Richtung schrumpfbare Flächenschicht als Verstärkungseinlage VEF gezeigt, bei der Löcher L in regelmäßiger Anordnung eingebracht sind, so daß hier ein Quasi-Gitter gebildet wird, wobei die Anordnung der Löcher L auch ungleichmäßig oder in anderen Formen, z.B. auch in eckiger Form, ausgebildet sein können. Die zwischen den einzelnen Löchern L befindlichen Materialstege entsprechen dabei den vorher beschriebenen Gitterelementen GE, so daß hier die gleichen Verhältnisse gelten.

Figur 3 zeigt die Anordnung von zwei übereinander angeordneten gitterförmgien Verstärkungseinlagen VEG1 und VEG2, wobei beide bezüglich ihrer Schrumpfrichtungen um einen Versetzungswinkel VW gegeneinander versetzt sind. Auf diese Weise bilden die beiden Verstärkungseinlagen innerhalb des Gesamtverbundes eine Verteilung und damit Reduzierung der Spannungen im Material bei einem eventuellen Riß oder Schnitt.

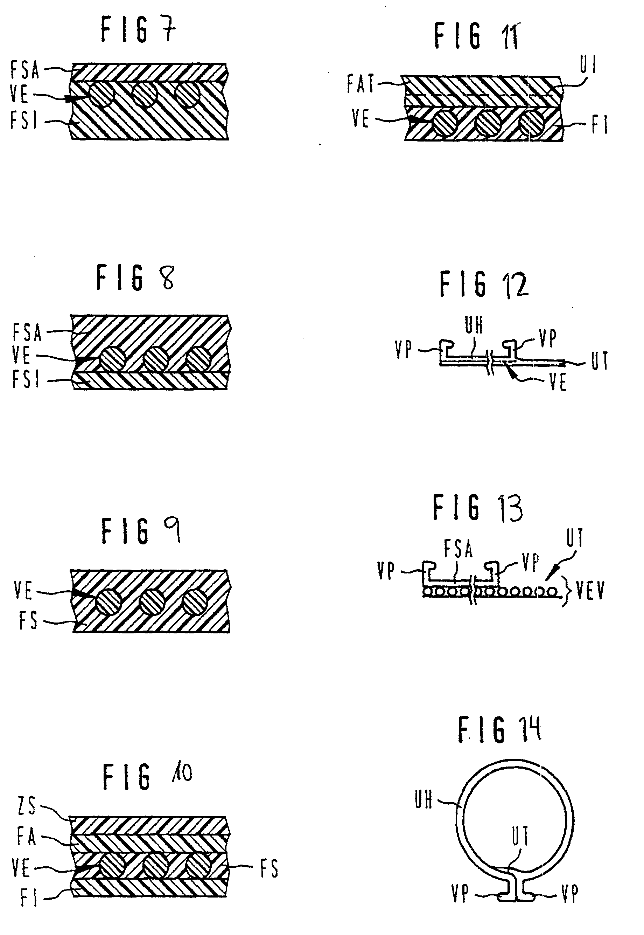

In Figur 4 sind verschiedene Querschnitte für die einzelnen Gitterelemente GE dargestellt, wie zum Beispiel kreisförmige KQ, ovale OQ, rechteckförmige RQ, quadratische QQ oder rautenförmige RAQ Querschnitte. Auch Vielecke bzw. Polygone RP können als Querschnittsformen gewählt werden.

In den folgenden Figuren 5 bis 9 sind Beispiele für den gesamten Verbund der Umhüllung dargestellt, wobei die Darstellung aus Übersichtlichkeitsgründen in schematischer Form erfolgt.

Figur 5 zeigt eine äußere schrumpfbare Flächenschicht FSA, auf deren Innenseite die schrumpfbare Verstärkungseinlage VE aufgebracht ist, wobei in den einzelnen Gittermaschen ein Füllmittel FM angedeutet ist, mit dem diese ausgefüllt sind.

Figur 6 zeigt, daß die schrumpfende Verstärkungseinlage VE zwischen einer äußeren Flächenschicht FSA und einer inneren Flächenschicht FSI angeordnet ist.

Figur 7 zeigt ein Ausführungsbeispiel, bei dem die schrumpfbare Verstärkungsschicht VE in einer inneren Flächenschicht FSI eingelagert ist, die fest haftend mit einer äußeren Flächenschicht FSA verbunden ist. Die Gittermaschen bzw. Löcher der Verstärkungseinlage sind dabei mit dem Material der inneren Flächenschicht FSI ausgefüllt.

Figur 8 zeigt die Einlagerung der schrumpfbaren Verstärkungsschicht VE in der äußeren schrumpfbaren Flächenschicht FSA, wobei die Gittermaschen oder Löcher der Verstärkungseinlage mit dem Material dieser Flächenschicht FSA ausgefüllt sind. Im Inneren ist eine innere Flächenschicht FSI aufgebracht.

In Figur 9 wird dargestellt, daß die schrumpfbare Verstärkungseinlage VE in der einfachsten Form in einer einzigen Flächenschicht FS eingelagert ist.

Figur 10 deutet an, daß weitere Zusatzschichten ZS auf dem Grundverbund der Umhüllung aufgebracht werden können, wobei diese Zusatzschichten ZS für weitere Zwecke vorgesehen sind.

So dienen solche Zusatzschichten ZS beispielsweise für optische Anzeigen, mit denen angezeigt wird, ob bzw. wann genügend Wärme für den Schrumpfvorgang zugeführt worden ist. Solche Zusatzschichten bestehen zum Beispiel aus Thermochrom-Umschlagfarben.

Figur 11 deutet an, daß in der äußeren, hier transparenten äußeren Flächenschicht FAT ein Umschlagindikator UI eingesetzt ist, der beispielsweise seine Farbe ändert, wenn genügend Wärme zugeführt worden ist. Durch die transparente Flächenschicht kann diese Änderung beobachtet werden.

Figur 12 zeigt, daß die längsverlaufenden Kanten der Umhüllung mit Verschlußprofilen VP versehen sind, mit denen nach dem Umhüllen des Gegenstandes die Längskanten in geschlossenem Zustand zusammengehalten werden, wobei dies mit einer aufgezogenen C-förmigen Verschlußschiene erfolgt. Es ist angedeutet, daß der Gesamtverbund der Umhüllung UH eine eingelagerte schrumpfbare Verstärkungseinlage VE enthält. Entlang einer Längskante ist ein Fortsatz ausgebildet, der als Untertritt UT für die Überbrückung bzw. Abdeckung des Verschlußbereiches vorgesehen ist.

Figur 13 zeigt schließlich an, daß die gitterförmige Verstärkungseinlage VEV als eigener Verbund verwendet werden kann, das heißt die gitterförmige Verstärkungseinlage ist zumindest im Bereich des Untertrittes UT mit einer Flächenschicht versehen, damit die Gittermaschen bzw. die Löcher abgedichtet sind. Die Verfüllung zwischen Gitterverbund VEV und der äußeren Flächenschicht FSA erfolgt wie in Figur 7 bis 13 dargestellt ist.

Figur 14 zeigt schließlich eine Umhüllung UH gemäß der Erfindung in geschlossenem Zustand, wobei deutlich wird, daß die beiden Verschlußprofile VP zum Verschluß zusammengeführt und mit einer hier nicht gezeigten Verschlußschiene zusammengehalten werden. Der Untertritt UT überdeckt dichtend den Längsverschluß im Verschlußbereich, wobei die Abdichtung mit Hilfe einer Schmelzkleberbeschichtung, die auf der Innenseite der Umhüllung aufgebracht ist, bewerkstelligt wird.

Weiterhin kann die Verstärkungseinlage als Spritz- oder Stanzteil hergestellt werden; doch sind auch gitterförmige Strukturen aus in einer Ebene sich berührenden Gitterelementen denkbar, wie sie sich beim Aneinanderfügen von "Zick-Zack"-Elementen ergibt.

Die Vernetzung kann entweder durch energiereiche Bestrahlung oder durch peroxydische oder chemische Zusätze (Silan) erfolgen, wobei auch eine Kombination beider Verfahren möglich ist. So kann beispielsweise die an sich bekannte Silanvernetzung durchgeführt werden.

Unter anderem eignen sich für die wärmeschrumpfbare Umhüllung folgende Materialien, die sowohl für die Flächenschichten wie auch für die Verstärkungseinlage verwendet werden können.
- High-Density-Polyethylen (EDPE)
- Low-Density-Polyethylen (LDPE)
- Linear-Low-Density-Polyethylen (LLDPE)
- Linear-Low-Density-Polyethylen (LLDPE) mit Ethylen-Copolymer/Terpolymer
- Compound aus HDPE/LDPE/LLDPE
- Compound aus Ethylen-Copolymer/Terpolymer

## Patentansprüche

1. Wärmeschrumpfbare Umhüllung mit einer Flächenschicht (FS) und einer Verstärkungseinlage (VE), welche aus einem Gitter aus langgestreckten, parallelen ersten und langgestreckten, parallelen zweiten Gitterelementen (GE) gebildet ist,
wobei die ersten und die zweiten Gitterelemente (GE) überkreuz zueinander angeordnet sind, und
wobei die ersten und die zweiten Gitterelemente (GE) aus Kunststoff sind und an ihren Kreuzstellen fest haftend miteinander verbunden sind,
**dadurch gekennzeichnet,**
**daß** die Umhüllung einen Längsschlitz aufweist, dessen Schlitzränder mit an den Längskanten verlaufenden Verschlußelementen (VP) versehen sind,
**daß** sowohl die Flächenschicht (FS) als auch das Gitter in Richtung senkrecht zu den Verschlußelementen (VP) schrumpfbar sind, indem sowohl die Flächenschicht (FS) als auch das Gitter in Richtung senkrecht zu den Verschlußelementen (VP) gereckt sind,
**daß** die Reck- bzw. die Schrumpfrichtung (SR) in einem Winkel zur Längsrichtung der ersten und der zweiten Gitterelemente (GE) verläuft.

2. Wärmeschrumpfbare Umhüllung nach Anspruch 1
**dadurch gekennzeichnet,**
**daß** die Gitterelemente (GE) rautenförmige Netzmaschen (GMR) bilden.

3. Wärmeschrumpfbare Umhüllung nach Anspruch 1
**dadurch gekennzeichnet,**
**daß** die Verstärkungseinlage in Form einer Matte als Spritz- oder Stanzteil ausgebildet ist.

4. Wärmeschrumpfbare Umhüllung nach Anspruch 1,
**dadurch gekennzeichnet,**
**daß** parallel verlaufende Gitterelemente in Abständen miteinander verbunden sind, wobei die Gitterstruktur durch Auseinanderziehen der Gitterelemente in Querrichtung erreicht ist.

5. Wärmeschrumpfbare Umhüllung nach einem der vorhergehenden Ansprüche,
**dadurch gekennzeichnet,**
**daß** mindestens zwei Verstärkungseinlagen (VEG1, VEG2) übereinander angeordnet sind.

6. Wärmeschrumpfbare Umhüllung nach Anspruch 5,
**dadurch gekennzeichnet,**
**daß** die Verstärkungseinlagen (VE) bezüglich ihrer Schrumpfrichtungen (SR) unter einem Versetzungswinkel (VW) gegeneinander versetzt sind.

7. Wärmeschrumpfbare Umhüllung nach einem der vorhergehenden Ansprüche,
**dadurch gekennzeichnet,**
**daß** die Verstärkungseinlage (VE, VEF) auf der Flächenschicht (FSA) außen fest haftend angeordnet ist.

8. Wärmeschrumpfbare Umhüllung nach einem der Ansprüche 1 bis 6,
**dadurch gekennzeichnet,**
**daß** die Verstärkungseinlage (VE, VEF) auf der Flächenschicht innen fest haftend angeordnet ist.

9. Wärmeschrumpfbare Umhüllung nach einem der Ansprüche
1 bis 6,
**dadurch gekennzeichnet,**
**daß** die Verstärkungseinlage (VE, VEF) in der schrumpfbaren Flächenschicht (FS) angeordnet ist.

10. Wärmeschrumpfbare Umhüllung nach einem der Ansprüche 1 bis 6,
**dadurch gekennzeichnet,**
**daß** die Verstärkungseinlage (VE, VEF) wechselseitig innen und außen auf der Flächenschicht (FS) angeordnet ist.

11. Wärmeschrumpfbare Umhüllung nach einem der vorhergehenden Ansprüche,
**dadurch gekennzeichnet,**
**daß** die Flächenschicht (FS) höher vernetzt ist als die Verstärkungseinlage (VE).

12. Wärmeschrumpfbare Umhüllung nach einem der Ansprüche 1 bis 10,
**dadurch gekennzeichnet,**
**daß** die Flächenschicht (FS) niedriger vernetzt ist als die Verstärkungsschicht (VE).

13. Wärmeschrumpfbare Umhüllung nach einem der Ansprüche 1 bis 10,
**dadurch gekennzeichnet,**
**daß** die Flächenschicht (FS) und die Verstärkungseinlage (VE) gleich stark vernetzt sind.

14. Wärmeschrumpfbare Umhüllung nach einem der vorhergehenden Ansprüche,
**dadurch gekennzeichnet,**
**daß** die Materialien für die Flächenschicht (FS) und/oder die Verstärkungseinlage (VE) mit Vernetzungsbeschleunigern, vorzugsweise Triallylcyanat, versetzt sind.

15. Wärmeschrumpfbare Umhüllung nach einem der vorhergehenden Ansprüche,
**dadurch gekennzeichnet,**
**daß** der Gesamtverbund vernetzt und gereckt ist.

16. Wärmeschrumpfbare Umhüllung nach einem der Ansprüche 1 bis 14,
**dadurch gekennzeichnet,**
**daß** die Flächenschicht (FS) und die Verstärkungseinlage (FE) vor dem Laminieren für sich vernetzt und gereckt sind.

17. Wärmeschrumpfbare Umhüllung nach einem der vorhergehenden Ansprüche,
**dadurch gekennzeichnet,**
**daß** die Verstärkungseinlage (VE) zwischen zwei Flächenschichten (FSI, FSA) angeordnet ist.

18. Wärmeschrumpfbare Umhüllung nach einem der vorhergehenden Ansprüche,
**dadurch gekennzeichnet,**
**daß** die Gittermaschen (GM) oder Löcher (L) der gitterförmigen Verstärkungseinlage (VE, VEF) mit einem materialkompatiblen Füllmittel aufgefüllt sind.

19. Wärmeschrumpfbare Umhüllung nach einem der vorhergehenden Ansprüche,
**dadurch gekennzeichnet,**
**daß** die Oberfläche der außen liegenden Flächenschicht (FS) gegen Abtropfen bei Wärmeeinwirkung hochstabilisiert, d.h. formstabil ist.

20. Wärmeschrumpfbare Umhüllung nach einem der vorhergehenden Ansprüche,
**dadurch gekennzeichnet,**
**daß** die Oberfläche der außen liegenden Flächenschicht (FS) flammfeste Zusätze enthält.

21. Wärmeschrumpfbare Umhüllung nach einem der vorhergehenden Ansprüche,
**dadurch gekennzeichnet,**
**daß** sie zumindest in einer Flächenschicht (FS) termitenresistente Zusätze enthält.

22. Wärmeschrumpfbare Umhüllung nach einem der vorhergehenden Ansprüche,
**dadurch gekennzeichnet,**
**daß** auf der Oberfläche der außen liegenden Flächenschicht (FSA) ein Thermoindikator angeordnet ist, der vorzugsweise seine Farbe und/oder seine Form bei Erreichen der Solltemperatur ändert.

23. Wärmeschrumpfbare Umhüllung nach Anspruch 22,
**dadurch gekennzeichnet,**
**daß** die äußere Flächenschicht (FS) vor dem Schrumpfen transparent ist.

24. Wärmeschrumpfbare Umhüllung nach Anspruch 22,
**dadurch gekennzeichnet,**
**daß** die äußere Flächenschicht (FSA) nach dem Schrumpfen transparent wird.

25. Wärmeschrumpfbare Umhüllung nach einem der Ansprüche 23 oder 24,
**dadurch gekennzeichnet,**
**daß** die äußere Flächenschicht (FAT) transparent ist und daß die eingelagerte Verstärkungseinlage (VE, VEF) bei Erreichen der Solltemperatur ihre Farbe ändert.

26. Wärmeschrumpfbare Umhüllung nach einem der Ansprüche 1 bis 24,
**dadurch gekennzeichnet,**
**daß** die Verstärkungseinlage (VE) in den Kreuzungspunkten (K) bei Erreichen der Solltemperatur aufschwillt, so daß die Oberfläche der Flächenschicht (FS) noppenähnliche Struktur zeigt.

27. Wärmeschrumpfbare Umhüllung nach Anspruch 18,
**dadurch gekennzeichnet,**
**daß** das Füllmittel (FM) mit einem durch Wärmeeinwirkung reagierenden Treibmittel versehen ist, so daß bei Erreichen der Solitemperatur eine noppenähnliche Oberfläche entsteht.

28. Wärmeschrumpfbare Umhüllung nach einem der vorhergehenden Ansprüche,
**dadurch gekennzeichnet,**
**daß** die Verstärkungseinlage (VE, VEF) auf einer Trägerschicht angeordnet ist, die als Verlängerung über eine Längskante der Umhüllung hinaus einen Untertritt (UT) bildet.

29. Wärmeschrumpfbare Umhüllung nach einem der vorhergehenden Ansprüche,
**dadurch gekennzeichnet,**
**daß** in Querrichtung und/oder Längsrichtung zusätzlich nicht schrumpfende Hilfselemente, vorzugsweise Glas-, Kevlar-, Baumwollfäden oder Fäden aus nicht vernetzbarem Material, angeordnet sind.

30. Wärmeschrumpfbare Umhüllung nach einem der vorhergehenden Ansprüche,
**dadurch gekennzeichnet,**
**daß** die Verstärkungseinlage und/oder Flächenschicht aus High-Density-Polyethylen (HDPE) hergestellt ist.

31. Wärmeschrumpfbare Umhüllung nach einem der Ansprüche 1 bis 29,
**dadurch gekennzeichnet,**
**daß** die Verstärkungseinlage und/oder Flächenschicht aus Low-Density-Polyethylen (LDPE) hergestellt ist.

32. Wärmeschrumpfbare Umhüllung nach einem der Ansprüche 1 bis 29,
**dadurch gekennzeichnet,**
**daß** die Verstärkungseinlage und/oder Flächenschicht aus Linear-low-density-Polyethylen (LLDPE) hergestellt ist.

33. Wärmeschrumpfbare Umhüllung nach einem der Ansprüche 1 bis 29,
**dadurch gekennzeichnet,**
**daß** die Verstärkungseinlage und/oder Flächenschicht aus einem Compound aus high-density-Polyethylen/low-density Polyethylen/Linear low density Polyethylen (HDPE/LDPE/LLDPE) hergestellt ist.

34. Wärmeschrumpfbare Umhüllung nach einem der Ansprüche 1 bis 29,
**dadurch gekennzeichnet,**
**daß** die Verstärkungseinlage und/oder Flächenschicht aus einem Compound aus Ethylen-Copolymer/Terpolymere hergestellt ist.

35. Wärmeschrumpfbare Umhüllung nach einem der Ansprüche 1 bis 29,
**dadurch gekennzeichnet,**
**daß** die Verstärkungseinlage aus gummielastischem Material besteht.

36. Wärmeschrumpfbare Umhüllung nach einem der Ansprüche 1 bis 29,
**dadurch gekennzeichnet,**
**daß** die Verstärkungseinlage aus thermoplastischen Elastomeren besteht.

37. Wärmeschrumpfbare Umhüllung nach einem der Ansprüche 1 bis 29,
**dadurch gekennzeichnet,**
**daß** die Verstärkungseinlage aus einem Thermoplasten besteht.

38. Wärmeschrumpfbare Umhüllung nach einem der vorhergehenden Ansprüche,
**dadurch gekennzeichnet,**
**daß** das Material der Verstärkungseinlage silanvernetzbar, peroxydisch vernetzbar, oder strahlenvernetzbar oder mit verschiedenen Verfahrenskombinationen vernetzbar ist.

39. Wärmeschrumpfbare Umhüllung nach einem der vorhergehenden Ansprüche,
**dadurch gekennzeichnet,**
**daß** Verstärkungseinlage und/oder Flächenschicht aus einem aufblähbaren Material, das als Temperatursperre und/oder als Brandschutz wirkt, besteht.

40. Wärmeschrumpfbare Umhüllung nach einem der Ansprüche 1 bis 29,
**dadurch gekennzeichnet,**
**daß** die Verstärkungseinlage und/oder Flächenschicht aus linear low density Polyethylen (LLDPE) mit Ethylen-Copolymer-Terpolymer beseht.

## Claims

1. Heat-shrinkable envelope comprising a surface layer (FS) and a reinforcing insert (VE), said reinforcing insert being formed of a grid of elongated parallel first and elongated parallel second grid elements (GE),
wherein the first and second grid elements (GE) are arranged as to cross one another, and
wherein the first and second grid elements (GE) are made of plastic and are connected firmly adhering to one another in their intersections,
**characterized in that**
the envelope is provided with a longitudinal slit, the edges of which have closure elements (VP) along the longitudinal edges,
both the surface layer (FS) and the grid are shrinkable in the direction vertical to the closure elements (VP), due to the fact that both the surface layer (FS) and the grid are stretched in a vertical direction to the closure elements (VP),
the stretching direction and, respectively, the shrinking direction (SR) are at an angle with respect to the longitudinal direction of the first and second grid elements (GE).

2. Heat-shrinkable envelope according to claim 1,
**characterized in that**
the grid elements (GE) form a rhomboid net mesh (GMR).

3. Heat-shrinkable envelope according to claim 1,
**characterized in that**
the reinforcing insert is formed as a mat to form an injected or punched part.

4. Heat-shrinkable envelope according to claim 1,
**characterized in that**
grid elements extending parallel to each other are connected to one another at intervals, said grid structure being achieved by pulling the grid elements apart in a transverse direction.

5. Heat-shrinkable envelope according to any of the preceding claims,
**characterized in that**
at least two reinforcing inserts (VEG1, VEG2) are arranged one over the other.

6. Heat-shrinkable envelope according to claim 5,
**characterized in that**
the reinforcing inserts (VE) are offset relative to one another by an offset angle (VW) with respect to their shrink directions (SR).

7. Heat-shrinkable envelope according to any of the preceding claims,
**characterized in that**
the reinforcing insert (VE, VEF) is applied on the outside of the surface layer (FSA) with a firm adhesion.

8. Heat-shrinkable envelope according to any of claims 1 to 6,
**characterized in that**
the reinforcing insert (VE, VEF) is arranged on the inside of the surface layer with a firm adhesion.

9. Heat-shrinkable envelope according to any of claims 1 to 6,
**characterized in that**
the reinforcing insert (VE, VEF) is arranged in the shrinkable surface layer (FS).

10. Heat-shrinkable envelope according to any of claims 1 to 6,
**characterized in that**
the reinforcing insert (VE, VEF) is arranged on the inside and on the outside of the surface layer (FS) in alternation.

11. Heat-shrinkable envelope according to any of the preceding claims,
**characterized in that**
the surface layer (FS) is crosslinked to a higher degree than the reinforcing insert (VE).

12. Heat-shrinkable envelope according to any of claims 1 to 10,
**characterized in that**
the surface layer (FS) is crosslinked to a lesser degree than the reinforcing insert (VE).

13. Heat-shrinkable envelope according to any of claims 1 to 10,
**characterized in that**
the surface layer (FS) and the reinforcing insert (VE) are crosslinked to the same degree.

14. Heat-shrinkable envelope according to any of the preceding claims,
**characterized in that**
the materials for the surface layer (FS) and/or the reinforcing insert (VE) are laced with crosslinking accelerators, preferably triallylcyanate.

15. Heat-shrinkable envelope according to any of the preceding claims,
**characterized in that**
the overall composite is crosslinked and stretched.

16. Heat-shrinkable envelope according to any of claims 1 to 14,
**characterized in that**
the surface layer (FS) and the reinforcing insert (FE) are separately crosslinked and stretched before being laminated.

17. Heat-shrinkable envelope according to any of the preceding claims,
**characterized in that**
the reinforcing insert (VE) is arranged between two surface layers (FSI, FSA).

18. Heat-shrinkable envelope according to any of the preceding claims,
**characterized in that**
the grid meshes (GM) or holes (L) of the grid-shaped reinforcing insert (VE, VEF) are filled with a material-compatible filler.

19. Heat-shrinkable envelope according to any of the preceding claims,
**characterized in that**
the surface of the externally disposed surface layer (FS) is higly stabilized, i.e. shape-stable, against dripping under the application of heat.

20. Heat-shrinkable envelope according to any of the preceding claims,
**characterized in that**
the surface of the externally-disposed surface layer (FS) contains flame-resistant additives.

21. Heat-shrinkable envelope according to any of the preceding claims,
**characterized in that**
it includes in at least one surface layer (FS) termite-resistant additives.

22. Heat-shrinkable envelope according to any of the preceding claims,
**characterized in that**
on the surface of the externally-disposed surface layer (FSA) a thermo-indicator is arranged, which preferably changes colour and/or shape when a rated temperature is reached.

23. Heat-shrinkable envelope according to claim 22,
**characterized in that**
the outer surface layer (FS) is transparent before shrinking.

24. Heat-shrinkable envelope according to claim 22,
**characterized in that**
the outer surface layer (FSA) becomes tansparent after shrinking.

25. Heat-shrinkable envelope according to any of claims 23 or 24,
**characterized in that**
the outer surface layer (FAT) is transparent and that the reinforcing insert (VE, VEF) embedded therein changes its colour when the rated temperature is reached.

26. Heat-shrinkable envelope according to any of claims 1 to 21,
**characterized in that**
the reinforcing insert (VE) swells in the intersections (K) when the rated temperature is reached so that the surface of the surface layer (FS) exhibits a nub-like structure.

27. Heat-shrinkable envelope according to claim 18,
**characterized in that**
the filling (FM) is provided with a swelling agent reacting to the application of heat, so that a nub-like surface occurs when the rated temperature is reached.

28. Heat-shrinkable envelope according to any of the preceding claims,
**characterized in that**
the reinforcing insert (VE, VEF) is arranged on a carrier layer that extends beyond the longitudinal edge of the envelope and forms an underflap (UT).

29. Heat-shrinkable envelope according to any of the preceding claims,
**characterized in that**
in transversal and/or longitudinal direction additionally non-shrinking auxiliary elements, preferably glass threads, Kevlar threads, cotton threads or threads of non-crosslinkable material, are arranged.

30. Heat-shrinkable envelope according to any of the preceding claims,
**characterized in that**
the reinforcing insert and/or surface layer is manufactured of high-density polyethylene (HDPE).

31. Heat-shrinkable envelope according to any of claims 1 to 29,
**characterized in that**
the reinforcing insert and/or surface layer is manufactured of low-density polyethylene (LDPE).

32. Heat-shrinkable envelope according to any of claims 1 to 29,
**characterized in that**
the reinforcing insert and/or surface layer is manufactured of linear low-density polyethylene (LLDPE).

33. Heat-shrinkable envelope according to any of claims 1 to 29,
**characterized in that**
the reinforcing insert and/or surface layer is manufactured of a compound of high-density polyethylene/low-density polyethylene/linear low-density polyethylene (HDPE/LDPE/LLDPE).

34. Heat-shrinkable envelope according to any of claims 1 to 29,
**characterized in that**
the reinforcing insert and/or surface layer is manufactured of a compound of ethylene copolymer/terpolymers.

35. Heat-shrinkable envelope according to any of claims 1 to 29,
**characterized in that**
the reinforcing insert is composed of a rubber-elastic material.

36. Heat-shrinkable envelope according to any of claims 1 to 29,
**characterized in that**
the reinforcing insert is composed of thermoplastic elastomers.

37. Heat-shrinkable envelope according to any of claims 1 to 29,
**characterized in that**
the reinforcing insert is composed of thermoplastics.

38. Heat-shrinkable envelope according to any of the preceding claims,
**characterized in that**
the material of the reinforcing insert is crosslinkable by hydrosilicon crosslinking, peroxidically crosslinking and radiation crosslinking and combinations thereof.

39. Heat-shrinkable envelope according to any of the preceding claims,
**characterized in that**
the reinforcing insert and/or surface layer is composed of a swellable material that acts as a temperature barrier and/or as fire protection.

40. Heat-shrinkable envelope according to any of claims 1 to 29,
**characterized in that**
the reinforcing insert and/or the surface layer is composed of linear low-density polyethylene (LLDPE) with ethylene copolymer-terpolymer.

## Revendications

1. Enveloppe thermorétractable comportant une couche en forme de nappe (FS) et un insert de renfort, qui est formé par un réseau de premiers éléments (GE) allongés et parallèles et de seconds éléments (GE) allongés et parallèles,
dans laquelle les premiers et seconds éléments (GE) du réseau sont disposés de manière à se croiser les uns les autres, et
dans laquelle les premiers et seconds éléments (GE) du réseau sont formés d'une matière plastique et sont reliés entre eux fermement par adhérence au niveau de leurs points de croisement,
**caractérisée en ce**
**que** l'enveloppe possède une fente longitudinale, dont les bords sont pourvus d'éléments de fermeture (VP) qui s'étendent le long des bords longitudinaux de l'enveloppe,
**qu'**aussi bien la couche en forme de nappe (FS) que le réseau peuvent être contracté dans une direction perpendiculaire aux éléments de fermeture (VP) par le fait qu'aussi bien la couche en forme de nappe (FS) ainsi que le réseau sont étirés dans la direction perpendiculaire aux éléments de fermeture (VP),
**que** la direction d'étirage ou la direction de contraction (SR) fait un angle par rapport à la direction longitudinale des premiers et seconds éléments (GE) du réseau.

2. Enveloppe thermorétractable selon la revendication 1, **caractérisée en ce que** les éléments (GE) du réseau forment des mailles (GMR) d'un réseau en forme de losanges.

3. Enveloppe thermorétractable selon la revendication 1, **caractérisée en ce que** l'insert de renfort est agencé sous la forme d'un mat en tant que pièce moulée par injection ou pièce découpée.

4. Enveloppe thermorétractable selon la revendication 1, **caractérisée en ce que** des éléments parallèles du réseau sont reliés entre eux à une certaine distance, la structure de réseau étant obtenue par écartement des éléments du réseau dans la direction transversale.

5. Enveloppe thermorétractable selon l'une des revendications précédentes, **caractérisée en ce qu'**au moins deux inserts de renfort (VEG1,VEG2) sont disposés d'une manière superposée.

6. Enveloppe thermorétractable selon la revendication 5, **caractérisée en ce que** les inserts de renfort (VE) sont décalés les uns par rapport aux autres d'un angle de décalage (VW) dans leurs directions de contraction (SR).

7. Enveloppe thermorétractable selon l'une des revendications précédentes, **caractérisée en ce que** l'insert de renfort (VE,VEF) est disposé de manière à adhérer extérieurement de façon fixe sur la couche formant nappe (FSA).

8. Enveloppe thermorétractable selon l'une des revendications 1 à 6, **caractérisée en ce que** l'insert de renfort (VE,VEF) est disposé de manière à adhérer intérieurement fermement à la couche formant nappe.

9. Enveloppe thermorétractable selon l'une des revendications 1 à 6, **caractérisée en ce que** l'insert de renfort (VE,VEF) est disposé dans la couche formant nappe rétractable (FS).

10. Enveloppe thermorétractable selon l'une des revendications 1 à 6, **caractérisée en ce que** l'insert de renfort (VE,VF) est disposé alternativement intérieurement et extérieurement sur la couche formant nappe (FS).

11. Enveloppe thermorétractable selon l'une des revendications précédentes, **caractérisée en ce que** la couche formant nappe (FS) est réticulée à un niveau plus élevé que l'insert de renfort (VE).

12. Enveloppe thermorétractable selon l'une des revendications 1 à 10, **caractérisée en ce que** la couche formant nappe (FS) est réticulée à un niveau plus faible que la couche de renfort (VE).

13. Enveloppe thermorétractable selon l'une des revendications 1 à 10, **caractérisée en ce que** la couche formant nappe (FS) et l'insert de renfort (VE) sont réticulé au même degré.

14. Enveloppe thermorétractable selon l'une des revendications précédentes, **caractérisée en ce que** les matériaux pour la couche formant nappe (FS) et/ou pour l'insert de renfort (VE) sont mélangés à des accélérateurs de réticulation, de préférence du cyanate de triallyle.

15. Enveloppe thermorétractable selon l'une des revendications précédentes, **caractérisée en ce que** l'ensemble composite est réticulé et étiré.

16. Enveloppe thermorétractable selon l'une des revendications 1 à 14, **caractérisée en ce que** la couche formant nappe (FS) et l'insert de renfort (FE) sont réticulés en soi et étirés avant le laminage.

17. Enveloppe thermorétractable selon l'une des revendications précédentes, **caractérisée en ce que** l'insert de renfort (VE) est disposé entre deux couches formant nappes (FSI, FSA).

18. Enveloppe thermorétractable selon l'une des revendications précédentes, **caractérisée en ce que** les mailles (GM) du réseau ou les trous (L) de l'insert de renfort en forme de réseau (VE,VEF) sont remplis d'un agent de remplissage compatible avec les matériaux.

19. Enveloppe thermorétractable selon l'une des revendications précédentes, **caractérisée en ce que** la surface de la couche formant nappe (FS) située à l'extérieur est hautement stabilisée, c'est-à-dire possède une forme stable, vis-à-vis de la formation de gouttes lors de l'action d'une chaleur.

20. Enveloppe thermorétractable selon l'une des revendications précédentes, **caractérisée en ce que** la surface de la couche formant nappe (FS) située à l'extérieur contient des additifs résistant à la flamme.

21. Enveloppe thermorétractable selon l'une des revendications précédentes, **caractérisée en ce qu'**elle contient, au moins dans une couche formant nappe (FS), des additifs résistant aux termites.

22. Enveloppe thermorétractable selon l'une des revendications précédentes, **caractérisée en ce que** sur la surface de la couche formant nappe (FSA) située à l'extérieur est disposé un indicateur thermique, qui change de couleur et/ou de forme lorsque la température de consigne est atteinte.

23. Enveloppe thermorétractable selon la revendication 22, **caractérisée en ce que** la couche formant nappe extérieure (FS) est transparente avant la contraction.

24. Enveloppe thermorétractable selon la revendication 22, **caractérisée en ce que** la couche formant nappe extérieure (FSA) est transparente après la contraction

25. Enveloppe thermorétractable selon l'une des revendications 23 ou 34, **caractérisée en ce que** la couche formant nappe extérieure (FAT) est transparente et que l'insert de renfort inséré (VE,VEF) change de couleur lorsque la température de consigne est atteinte.

26. Enveloppe thermorétractable selon l'une des revendications 1 à 21, **caractérisée en ce que** l'insert de renfort (VE) gonfle au niveau des points de croisement (K) lorsque la température de consigne est atteinte de sorte que la surface de la couche formant nappe (FS) possède une structure en forme de bouton.

27. Enveloppe thermorétractable selon la revendication 18, **caractérisée en ce que** le milieu de remplissage (FM) est pourvu d'un agent propulsif qui réagit sous l'action de la chaleur de sorte que lorsque la température de consigne est atteinte, il apparaît une surface en forme de bouton.

28. Enveloppe thermorétractable selon l'une des revendications précédentes, **caractérisée en ce que** l'insert de renfort (VE,VEF) est disposé sur une couche de support, qui, en tant que prolongement définit, au-delà du bord longitudinal de l'enveloppe, un dégagement inférieur (UT).

29. Enveloppe thermorétractable selon l'une des revendications précédentes, **caractérisée en ce que** des éléments auxiliaires, qui ne se contractent pas, de préférence des fils de verre, de Kevlar et de coton ou des fils formés d'un matériau non réticulable, sont disposés en supplément dans la direction transversale et/ou dans la direction longitudinale.

30. Enveloppe thermorétractable selon l'une des revendications précédentes, **caractérisée en ce que** l'insert de renfort et/ou la couche formant nappe est réalisé en polyéthylène haute densité (HDPE).

31. Enveloppe thermorétractable selon l'une des revendications 1 à 29, **caractérisée en ce que** l'insert de renfort et/ou la couche formant nappe sont réalisés avec du polyéthylène basse densité (LDPE).

32. Enveloppe thermorétractable selon l'une des revendications 1 à 29, **caractérisée en ce que** l'insert de renfort et/ou la couche formant nappe sont réalisés avec du polyéthylène linéaire basse densité (LLDPE).

33. Enveloppe thermorétractable selon l'une des revendications 1 à 29, **caractérisée en ce que** l'insert de renfort et/ou la couche formant nappe sont constitués par un composé formé de polyéthylène haute densité/polyéthylène basse densité/polyéthylène linéaire basse densité (HDPE, LDPE, LLDPE).

34. Enveloppe thermorétractable selon l'une des revendications 1 à 29, **caractérisée en ce que** l'insert de renfort et/ou la couche formant nappe sont réalisés en un composé copolymère d'éthylène/terpolymères.

35. Enveloppe thermorétractable selon l'une des revendications 1 à 29, **caractérisée en ce que** l'insert de renfort est réalisé en un matériau présentant l'élasticité du caoutchouc.

36. Enveloppe thermorétractable selon l'une des revendications 1 à 29, **caractérisée en ce que** l'insert de renfort est constitué d'élastomères thermoplastiques.

37. Enveloppe thermorétractable selon l'une des revendications 1 à 29, **caractérisée en ce que** l'insert de renfort est constitué par une matière thermoplastique.

38. Enveloppe thermorétractable selon l'une des revendications précédentes, **caractérisée en ce que** le matériau de l'insert de renfort est réticulable avec du silane, est réticulable avec du peroxyde, ou est réticulable sous l'action d'un rayonnement ou est réticulable avec différentes combinaisons de procédés.

39. Enveloppe thermorétractable selon l'une des revendications précédentes, **caractérisée en ce que** l'insert de renfort et/ou la couche formant nappe est constitué par un matériau gonflable, qui agit en tant que système de blocage thermique et/ou en tant que système de protection contre un incendie.

40. Enveloppe thermorétractable selon l'une des revendications 1 à 29, **caractérisée en ce que** l'insert de renfort et/ou la couche formant nappe sont constitués par du polyéthylène linéaire basse densité (LLDPE) avec un copolymère-terpolymère d'éthylène.
